# FASCICULE DE BREVET EUROPEEN

(11) **EP 0 949 136 B1**
(45) Date de publication et mention de la délivrance du brevet: **02.05.2002**
(21) Numéro de dépôt: 99400363.0
(22) Date de dépôt: 16.02.1999
(51) Int. Cl.: B62D 1/19, F16F 7/12

(54) **Dispositif d'absorption d'énergie à double enroulement pour colonne de direction de véhicule automobile**
Energieaufnahmeeinheit mit doppelter Wicklung für eine Kraftfahrzeuglenksäule
Energy absorbing device with double winding for a steering column of a motor vehicle

(30) Priorité: 03.03.1998 FR 9802668
(43) Date de publication de la demande: 13.10.1999
(73) Titulaire: NACAM FRANCE SA, 41100 Vendôme (FR)
(72) Inventeur: Dufour, Christophe, Chandelay, 41130 Lance (FR); Millet, Pascal, Meslay, 41100 Vendome (FR); Fargeas, Vincent, 41160 Moree (FR)
(74) Mandataire: Cabinet Martinet & Lapoux

(56) Documents cités:
- DE-A- 19 510 615

## Description

La présente invention se rapporte à un dispositif d'absorption d'énergie à double enroulement pour colonne de direction de véhicule automobile.

DE-A-19 510 615 montre un dispositif d'absorption d'énergie selon le préambule de la revendication 1.

Le dispositif selon l'invention s'applique notamment à une colonne de direction réglable en profondeur ou en inclinaison ou bien à une colonne de direction réglable en profondeur et en inclinaison, comprenant un arbre de direction monté dans un tube-corps qui est supporté et bloqué dans la position voulue, le tube-corps étant relié par un ensemble support au châssis du véhicule ou à un élément de la carrosserie

L'amélioration croissante de la sécurité sur les colonnes de direction oblige les constructeurs à maîtriser tous les paramètres des systèmes d'absorption d'énergie. Ainsi, en ce qui concerne le procédé d'absorption d'énergie par déroulement d'un fil métallique, qui est de plus en plus sollicité sur les colonnes de direction, il est nécessaire mais difficile aujourd'hui, de faire varier la course d'absorption d'énergie en fonction d'un effort de choc demandé.

Ce compromis conduit souvent les fabricants de colonnes à réaliser des fils de forme complexe ou de section variable. L'inconvénient majeur réside dans la mise en oeuvre du produit, ce qui conduit le fabricant à des solutions technologiques onéreuses.

Le but de la présente invention est de proposer un dispositif d'absorption d'énergie, qui mette en oeuvre un fil de forme simple et facile à réaliser, qui permette d'absorber exactement une quantité prédéterminée d'énergie à dissiper, et qui se monte facilement dans l'encombrement des colonnes de direction existantes.

Selon l'invention, ce but est atteint avec un dispositif d'absorption d'énergie d'une colonne de direction de véhicule automobile selon la revendication 1.

Dans une réalisation particulièrement simple de l'invention, le double enroulement comprend deux enroulements hélicoïdaux de sens opposé, ayant des nombres de spires identiques. Lesdits enroulements sont reliés par une boucle centrale, qui coopère avec le support mobile relié au tube-corps, de manière que lors du choc, les deux enroulements soient déroulés simultanément pour absorber l'énergie.

Dans une réalisation plus élaborée de l'invention, le double enroulement comprend deux enroulements hélicoïdaux de sens opposé, ayant des nombres de spires différents. Lesdits enroulements sont reliés par une boucle centrale, qui coopère avec l'élément support mobile relié au tube-corps, de manière que lors du choc, dans un premier temps les deux enroulements soient déroulés simultanément, et dans un deuxième temps un seul enroulement soit déroulé afin d'ajuster la dissipation d'énergie dans le temps.

Afin d'adapter au mieux le dispositif de l'invention, la section de l'élément métallique du double enroulement est ronde, et dans d'autres réalisations, cette section est carrée ou rectangulaire ou autre.

Une mise en oeuvre particulièrement intéressante du dispositif d'absorption d'énergie selon l'invention a la structure ci-après :
- le support fixe comporte deux oreilles sensiblement parallèles entre lesquelles vient s'engager le support mobile, chacune des oreilles ayant un trou de passage de l'axe fixe de l'élément tournant du dispositif d'absorption d'énergie ;
- le support mobile comporte deux portions latérales et une portion de raccordement, chacune des portions latérales ayant à sa partie inférieure un trou de passage de l'axe d'un système de réglage de la colonne de direction en profondeur et/ou en inclinaison ;
- chacune des portions latérales a à sa partie supérieure un trou oblong de passage de l'axe fixe de l'élément tournant du dispositif d'absorption d'énergie, dont la longueur correspond à la course de récupération d'énergie ;
- l'élément tournant est disposé sur l'axe fixe du dispositif d'absorption d'énergie qui est bloqué sur chacune des oreilles du support fixe avec une force de serrage d'une valeur déterminée ;
- le double enroulement est accroché par sa boucle centrale à un tenon aménagé dans la portion de raccordement de l'élément support mobile, en passant au-dessus dudit tenon et en s'engageant dans des encoches agencées de chaque côté dudit tenon, de manière qu'en cas de choc, le volant avec le tube corps et le support mobile se déplacent vers l'avant du véhicule en entraînant le double enroulement, qui se déroule autour de l'axe fixe solidaire du support fixe.

Le dispositif d'absorption d'énergie selon l'invention présente ainsi l'avantage d'avoir une structure très simple à réaliser, avec une garantie de qualité de fabrication lorsqu'il est réalisé en très grande série, comme c'est le cas dans l'industrie automobile. De plus, le dispositif s'adapte facilement dans l'encombrement des colonnes de direction existantes. Le système de double enroulement permet d'augmenter l'effort absorbé tout en conservant une même course de déroulement. Il offre de plus l'avantage d'un gain de pièces et d'une très grande facilité de fixation sur son support, sans aucun apport de pièces ou de soudure pour le maintenir.

D'autres caractéristiques et avantages de l'invention ressortiront de la description qui va suivre, donnée à titre d'exemples nullement limitatifs, en référence aux dessins annexés dans lesquels :
- la figure 1 est une vue en perspective de l'ensemble du dispositif d'absorption d'énergie selon l'invention, avec un double enroulement de section ronde à nombres de spires identiques, la colonne de direction étant en position normale avant un choc ;
- la figure 2 est une vue analogue à la figure 1 avec un arrachement partiel, la colonne de direction étant en position après un choc ;
- la figure 3 est une vue analogue à la figure 1 avec un arrachement partiel, et un double enroulement de section carrée à nombre de spires identiques ;
- la figure 4 est une vue en coupe axiale dans le plan vertical, la colonne de direction étant en position normale avant un choc ;
- la figure 5 est une vue analogue à la figure 4, la colonne de direction étant en position après un choc ;
- la figure 6 est une vue en perspective partielle d'un double enroulement de section ronde à nombres de spires différents, avant un choc ;
- la figure 7 est une vue analogue à la figure 6, après un choc ; et
- la figure 8 est un graphe représentant l'effort absorbé durant la course d'absorption, dans le cas de la réalisation des figures 6 et 7.

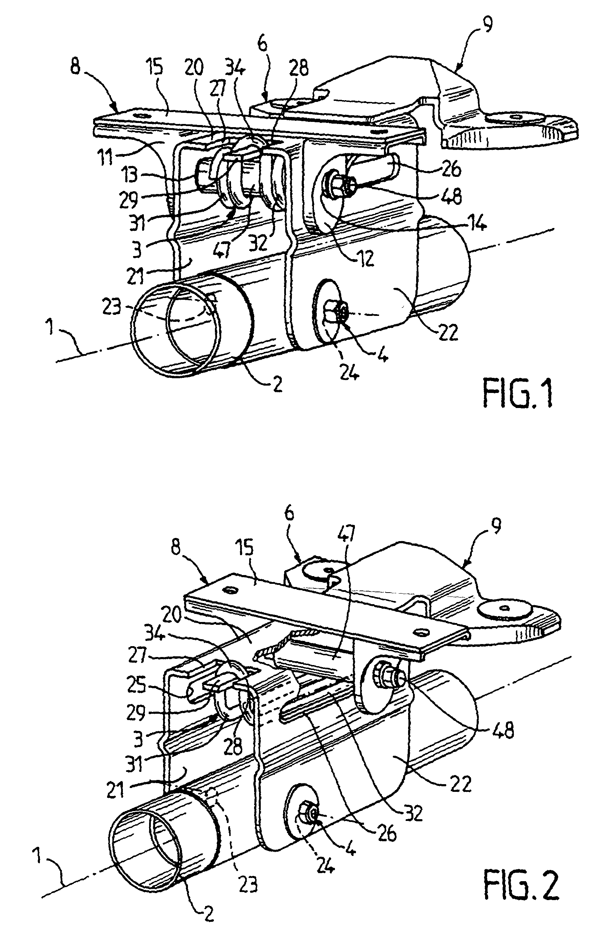

Une colonne de direction de véhicule automobile comprend un arbre de direction 1 qui est monté tournant dans un tube-corps 2, comme représenté sur les figures 1 à 5. Le tube-corps 2 est relié à un ensemble support 6 par un système 4 de réglage en profondeur et/ou en inclinaison. L'invention peut s'appliquer également à une colonne de direction non réglable, dont le tube-corps 2 est relié fixement à l'ensemble support 6.

L'ensemble support 6 comprend un support fixe 8 et un support mobile 9. Le support fixe 8 est solidaire du châssis 10 du véhicule ou d'un élément de carrosserie. Le support mobile 9 est relié au tube-corps 2 par le système de réglage en position 4. Le support mobile 9 est relié à l'élément support fixe 8 et est bloqué sur celui-ci avec une force d'une valeur déterminée, qui tient compte du choc à absorber afin de permettre dans ce cas au support mobile 9 de coulisser dans le support fixe 8.

Le support fixe 8 comporte une embase 15 avec deux oreilles 11 et 12 sensiblement parallèles et verticales qui sont montées sur cette embase 15. Chacune des oreilles 11 et 12 a un trou de passage respectif 13 et 14 de l'axe de tenue du support mobile 9.

Le support mobile 9 comporte deux portions latérales 21 et 22 sensiblement parallèles et verticales et une portion de raccordement 20 sensiblement horizontale. Le support mobile 9 vient s'engager entre les deux oreilles 11 et 12 du support fixe 8 par l'intermédiaire de ses deux portions latérales 21 et 22.

Chacune des portions latérales 21 et 22 a à sa partie supérieure un trou oblong respectif 25 et 26 de passage de l'axe de tenue du support mobile 9.

La longueur de chacun de ces trous oblongs 25 et 26 correspond à la course de récupération d'énergie.

Chacune des portions latérales 21 et 22 a à sa partie inférieure un trou de passage respectif 23 et 24 de l'axe du système de réglage 4.

Le dispositif d'absorption d'énergie est disposé de façon à agir dans une direction sensiblement parallèle à l'axe de la colonne de direction.

Comme cela est représenté sur les différentes figures 1 à 7, le dispositif d'absorption d'énergie de colonne de direction suivant l'invention comprend un double enroulement 3 d'un élément métallique, qui a une section constante déterminée pour répondre à la dissipation d'énergie demandée. Le double enroulement 3 comporte deux enroulements, qui ont le même axe et qui sont raccordés par une portion centrale. Le double enroulement 3 est monté sur un élément 47 tournant sur un axe fixe 48 solidaire du support fixe 8. Sa portion centrale est montée sur le support mobile 9 relié au tube-corps 2 de manière qu'en cas de choc, ledit support mobile 9 relié au tube-corps 2 et donc au volant pousse la portion centrale dudit double enroulement 3 afin de dérouler ledit double enroulement 3 en absorbant l'énergie à dissiper.

Dans le mode de réalisation représenté sur les figures 1 et 2, le double enroulement 3 est constitué par deux enroulements hélicoïdaux 31 et 32 de sens opposé, ayant une section ronde et un même nombre de spires, qui sont reliés par une boucle centrale 34. La boucle centrale 34 coopère avec le support mobile 9 relié au tube-corps 2. Le support mobile 9 agit sur ladite boucle centrale 34 en la poussant lors d'un choc, de manière que les deux enroulements 31 et 32 soient déroulés simultanément afin de dissiper la quantité d'énergie demandée.

L'élément tournant 47 est disposé sur l'axe fixe 48, qui est monté dans les deux trous de passage 13 et 14 des oreilles 11 et 12 du support fixe 8. L'axe fixe 48 traverse les deux trous oblongs 25 et 26 du support mobile 9, et il est bloqué avec une force de serrage d'une valeur déterminée sur les deux oreilles 11 et 12 du support fixe 8.

L'axe fixe 48 de l'élément tournant 47 constitue ainsi l'axe de tenue du support mobile 9 dans le support fixe 8.

La longueur de chacun des trous oblongs 25 et 26 correspond à la course de récupération d'énergie.

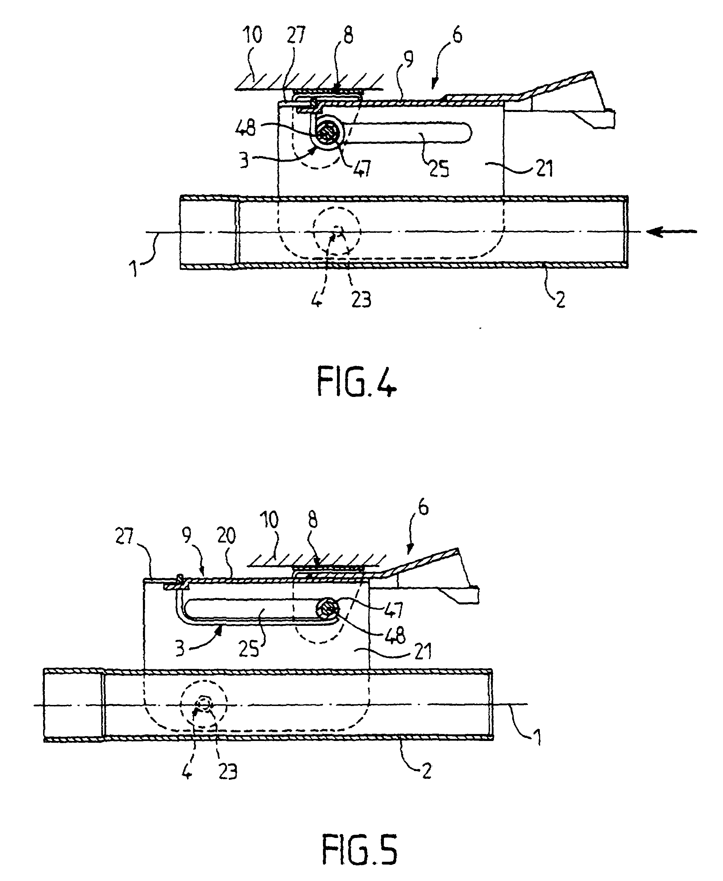

Sur les figures 1 et 4, en position normale avant un choc, l'axe fixe 48 traverse les trous oblongs 25 et 26 à leur extrémité avant.

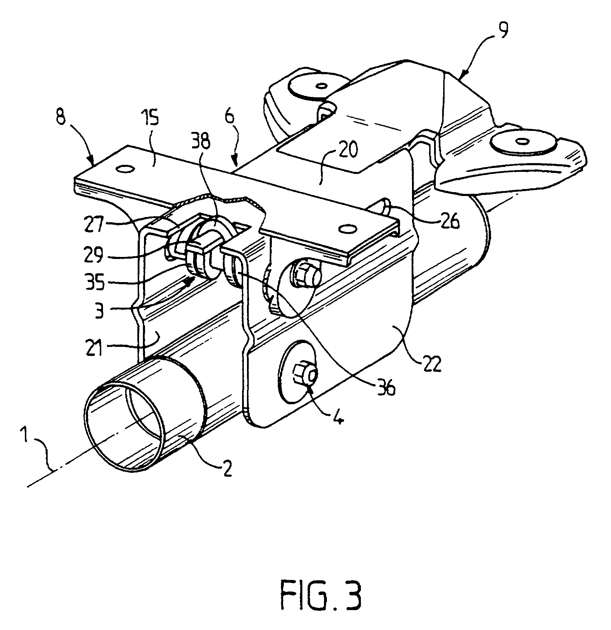

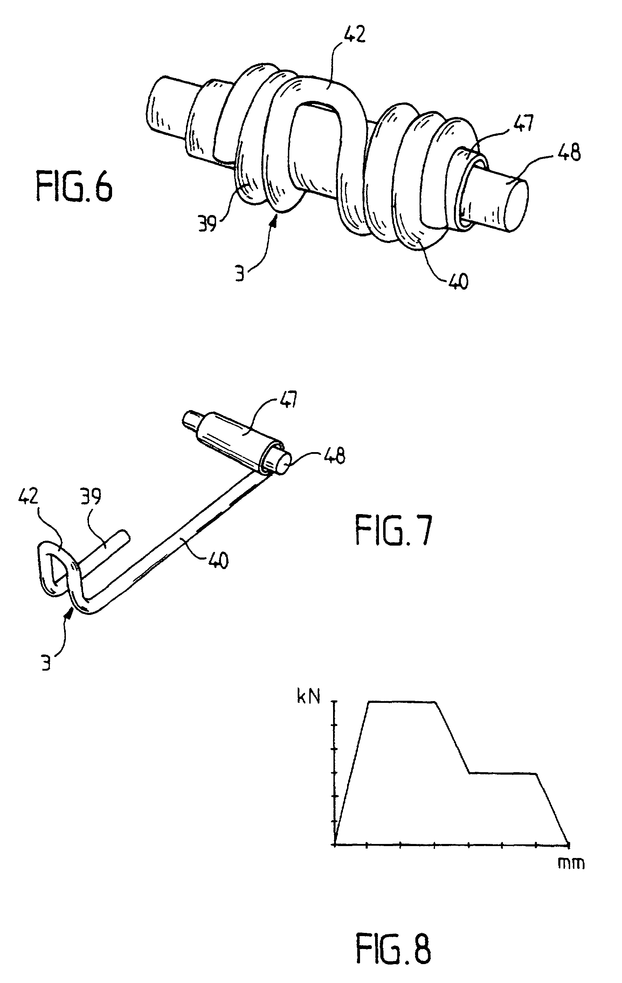

Sur les figures 3 et 5 en position après un choc, les trous oblongs 25 et 26 du support mobile 9 se sont déplacés vers l'avant.

Dans le mode de réalisation représenté sur les figures 1, 2, 4 et 5, le double enroulement 3 est monté sur l'élément tournant 47 et il est accroché par sa boucle centrale 34 à un tenon 29 aménagé dans la portion de raccordement 20 du support mobile 9 en passant au-dessus dudit tenon 29 et en s'engageant dans des encoches 27, 28 formées de chaque côté dudit tenon 29, de manière qu'en cas de choc, le volant avec le tube-corps 2 et le support mobile 9 se déplacent vers l'avant du véhicule en entraînant le double enroulement 3, qui se déroule autour de l'élément tournant 47 disposé sur l'axe fixe 48 solidaire du support fixe 8.

Dans le mode de réalisation représenté sur la figure 3, le double enroulement 3 est constitué par deux enroulements hélicoïdaux 35 et 36 de sens opposé ayant le même nombre de spires, les deux enroulements 35 et 36 étant reliés par une boucle centrale 38 et ayant une section carrée. La boucle centrale 38 coopère avec le support mobile 9 relié au tube-corps 2 et qui agit sur ladite boucle centrale 38 en la poussant lors d'un choc de manière que les deux enroulements 35 et 36 soient déroulés simultanément afin de dissiper l'énergie demandée.

Le montage de l'élément tournant 47 est identique au montage décrit précédemment pour les figures 1, 2, 4 et 5. Le double enroulement 3 est monté sur l'élément tournant 47, et il est accroché par sa boucle centrale 38 à un tenon 29 aménagé dans la portion de raccordement 20 du support mobile 9 en passant au-dessus dudit tenon 29 et en s'engageant dans des encoches 27, 28 formées de chaque côté dudit tenon 29. En cas de choc, le volant avec le tube-corps 2 et le support mobile 9 se déplacent vers l'avant du véhicule en entraînant le double enroulement 3, qui se déroule autour de l'élément tournant 47 disposé sur l'axe fixe 48 solidaire du support fixe 8.

Dans le mode de réalisation représenté sur les figures 6 et 7, le double enroulement 3 est constitué par deux enroulements hélicoïdaux 39 et 40 de sens opposé, ayant des nombres de spires différents, qui sont reliés par une boucle centrale 42 et ont une section ronde. La boucle centrale 42 coopère avec le support mobile 9 relié au tube-corps 2 et qui agit sur ladite boucle centrale 42 en la poussant lors d'un choc, de sorte que, dans un premier temps les deux enroulements 39 et 40 sont déroulés simultanément, et que dans un deuxième temps un seul enroulement 40 est déroulé afin d'ajuster la dissipation d'énergie dans le temps. Le montage des différents éléments est identique au montage décrit précédemment pour les figures 1, 2, 4 et 5.

Cet ajustement de dissipation d'énergie est représenté sur la figure 8, qui représente les variations de l'effort absorbé en fonction de la course du support mobile 9.

Dans ce dernier cas de réalisation avec des enroulements 39 et 40 ayant des nombres de spires différents, le montage se fait d'une manière analogue à celui représenté sur les figures 1 à 3.

Dans les cas de réalisations avec des enroulements ayant des nombres de spires différents, la section peut aussi être carrée. Ce type de section a été représenté sur la figure 3. La section du double enroulement peut en variante être rectangulaire ou autre.

## Revendications

1. Dispositif d'absorption d'énergie d'une colonne de direction de véhicule automobile comprenant un arbre de direction (1) monté tournant dans un tube-corps (2) relié par un ensemble support (6) au châssis (10) du véhicule, ledit dispositif d'absorption d'énergie agissant dans une direction sensiblement parallèle à l'axe de la colonne de direction, l'ensemble support (6) comprenant un support mobile (9) monté sur le tube-corps (2), un support fixe (8) solidaire du châssis (10) du véhicule, le support mobile (9) étant bloqué sur le support fixe (8) avec une force déterminée, et un enroulement (3) d'un élément métallique de section déterminée qui se déroule en cas de choc en absorbant l'énergie à dissiper **caractérisé en ce que** l'enroulement (3) comporte deux enroulements (31, 32 - 35, 36 - 39, 40) ayant le même axe, qui sont raccordés par une portion centrale (34, 38), ce double enroulement (3) étant monté sur un élément (47) tournant sur un axe fixe (48) solidaire du support fixe (8), et la portion centrale du double enroulement (3) étant montée sur le support mobile (9) pour qu'en cas de choc, ledit support mobile (9) pousse la portion centrale dudit double enroulement (3) de manière à dérouler ledit double enroulement (3) en absorbant l'énergie à dissiper.

2. Dispositif d'absorption d'énergie selon la revendication 1, **caractérisé en ce que** le double enroulement (3) comprend deux enroulements hélicoïdaux (31, 32 - 35, 36) de sens opposé et ayant un nombre de spires identique, qui sont reliés par une boucle centrale (34, 38) qui coopère avec le support mobile (9) de sorte que lors d'un choc, les deux enroulements (31, 32 - 35, 36) sont déroulés simultanément pour absorber l'énergie.

3. Dispositif d'absorption d'énergie selon la revendication 1, **caractérisé en ce que** le double enroulement (3) comprend deux enroulements hélicoïdaux (39, 40) de sens opposé et ayant des nombres de spires différents, lesdits enroulements (39, 40) étant reliés par une boucle centrale (42) qui coopère avec l'élément support mobile (9) de sorte que lors d'un choc, dans un premier temps les deux enroulements (39, 40) sont déroulés simultanément, et que dans un deuxième temps un seul enroulement (40) est déroulé afin d'ajuster l'absorption d'énergie dans le temps.

4. Dispositif d'absorption d'énergie selon l'une des revendications précédentes, **caractérisé en ce que** la section de l'élément métallique du double enroulement (3) est ronde.

5. Dispositif d'absorption d'énergie selon l'une des revendications 1 à 3, **caractérisé en ce que** la section de l'élément métallique du double enroulement (3) est carrée ou rectangulaire.

6. Dispositif d'absorption d'énergie selon l'une des revendications précédentes, **caractérisé en ce que** :
- le support fixe (8) comporte deux oreilles (11, 12) parallèles entre lesquelles vient s'engager le support mobile (9), chacune des oreilles (11, 12) ayant un trou de passage (13, 14) de l'axe fixe (48) de l'élément tournant (47) du dispositif d'absorption d'énergie ;
- le support mobile (9) comporte deux portions latérales (21, 22) et une portion de raccordement (20), chacune des portions latérales (21, 22) ayant à sa partie inférieure un trou de passage (23, 24) de l'axe d'un système (4) de réglage de l'inclinaison et/ou de la profondeur de la colonne de direction ;
- chacune des portions latérales (21, 22) ayant à sa partie supérieure un trou oblong (25, 26) de passage de l'axe fixe (48) de l'élément tournant (47) du dispositif d'absorption d'énergie, dont la longueur correspond à la course de récupération d'énergie ;
- l'axe fixe (48) du dispositif d'absorption d'énergie est bloqué sur chacune des oreilles (11, 12) de l'élément support fixe (8) avec une force de serrage d'une valeur déterminée ;
- le double enroulement (3) est accroché par sa portion centrale (34, 38, 42) à un tenon (29) aménagé dans la portion de raccordement (20) du support mobile (9) en passant au-dessus dudit tenon (29) et en s'engageant dans des encoches (27, 28) formées de chaque côté dudit tenon (29).

## Claims

1. An energy absorbing device for a motor vehicle steering column, comprising a steering shaft (1) rotatably mounted in a body-tube (2) connected by a support assembly (6) to the chassis (10) of the vehicle, said energy absorbing device operating in a direction substantially parallel to the axis of the steering column, the support assembly (6) comprising a mobile support (9) mounted on the body-tube (2), a fixed support (8) fastened to the chassis (10) of the vehicle, the mobile support (9) being immobilized on the fixed support (8) with a particular force, and a winding (3) of a metal member of particular section which unwinds in the event of an impact by absorbing the energy to be dissipated, the winding (3) comprises two coaxial windings (31, 32 - 35, 36 - 39, 40) having the same axis, which are joined by a central portion (34, 38), this double winding (3) being mounted on a member (47) rotating on a fixed shaft (48) attached to the fixed support (8) and the central portion of the double winding (3) being mounted on the mobile support (9) so that in the event of an impact said mobile support (9) pushes on the central portion of said double winding (3) to unwind said double winding (3) in absorbing the energy to be dissipated.

2. The energy absorbing device according to claim 1, **characterized in that** the double winding (3) comprises two helical windings (31, 32 - 35, 36) in opposite directions with the same number of turns in each winding which are joined by a central loop (34, 38) that cooperates with the mobile support (9) so that in the event of an impact the two windings (31, 32 - 35, 36) are unwound simultaneously to absorb energy.

3. The energy absorbing device according to claim 1, **characterized in that** the double winding (3) comprises two helical windings (39, 40) in opposite directions with different numbers of turns, said windings (39, 40) being joined by a central loop (42) which cooperates with the mobile support member (9) so that in the event of an impact initially both windings (39, 40) are unwound simultaneously and subsequently a single winding (40) is unwound, which varies the absorption of energy over time.

4. The energy absorbing device according to any one of preceding claims, **characterized in that** the metal member of the double winding (3) has a round section.

5. The energy absorbing device according to any one of claims 1 to 3, **characterized in that** the metal member of the double winding (3) has a square or rectangular section.

6. The energy absorbing device according to any of the preceding claims, **characterized in that** :
- the fixed support (8) comprises two parallel lugs (11, 12) between which the mobile support (9) is engaged, each of the lugs (11, 12) having a hole (13, 14) through which passes the fixed shaft (48) of the rotary member (47) of the energy absorbing device ;
- the mobile support (9) has two side portions (21, 22) and a connecting portion (20), each of the side portions (21, 22) having a hole (23, 24) in its lower part through which passes the shaft of a system (4) for adjusting the inclination and/or the depth of the steering column ;
- each of the side portions (21, 22) has an oblong hole (25, 26) in its upper part through which passes the fixed shaft (48) of the rotary member (47) of the energy absorbing device, the length of the oblong hole corresponding to the energy recovery travel,
- the fixed shaft (48) of the energy absorbing device is immobilized on each of the lugs (11, 12) of the fixed support member (8) with a particular clamping force,
the central portion (34, 38, 42) of the double winding (3) is hooked over a lug (29) in the connecting portion (20) of the mobile support (9), passing over the lug (29) and engaging in notches (27, 28) on each side of the lug (29).

## Patentansprüche

1. Energieaufnahmevorrichtung einer Kraftfahrzeuglenksäule, die eine Lenkwelle (1) umfasst, die drehbar in einem Rohrkörper (2) montiert ist, der durch eine Halteeinheit (6) mit dem Chassis (10) des Fahrzeugs verbunden ist, wobei die genannte Energieaufnahmevorrichtung in einer Richtung wirkt, die zur Achse der Lenksäule im wesentlichen parallel ist, wobei die Halteeinheit (6) einen beweglichen Träger (9) umfasst, der am Rohrkörper (2) montiert ist, einen festen Träger (8), der mit dem Chassis (10) des Fahrzeugs fest verbunden ist, wobei der bewegliche Träger (9) mit einer bestimmten Kraft auf dem festen Träger (8) blockiert ist, und eine Wicklung (3) eines Bauteiles aus Metall eines bestimmten Durchmessers, das sich im Fall eines Zusammenstoßes unter Aufnahme der abzuführenden Energie abrollt, **dadurch gekennzeichnet, dass** die Wicklung (3) zwei Wicklungen (31, 32 - 35, 36 - 39, 40) mit derselben Achse umfasst, die durch einen mittleren Abschnitt (34, 38) miteinander verbunden sind, wobei diese doppelte Wicklung (3) auf einem Teil (47) montiert ist, das sich um eine feste Achse (48) dreht, die mit dem festen Träger (8) fest verbunden ist, und der mittlere Abschnitt der doppelten Wicklung (3) am beweglichen Träger (9) angebracht ist, damit im Fall eines Stoßes der genannte bewegliche Träger (9) den mittleren Abschnitt der genannten doppelten Wicklung (3) schiebt, so dass die genannte doppelte Wicklung (3) unter Aufnahme der abzuführenden Energie abgerollt wird.

2. Energieaufnahmevorrichtung nach Patentanspruch 1, **dadurch gekennzeichnet, dass** die doppelte Wicklung (3) zwei Spiralwicklungen (31, 32 - 35, 36) mit entgegengesetzter Richtung und gleicher Windungszahl umfasst, die durch einen mittleren Bügel (34, 38) verbunden sind, der mit dem beweglichen Träger (9) derart zusammenarbeitet, dass bei einem Stoß beide Wicklungen (31, 32 - 35, 36) gleichzeitig abgerollt werden, um die Energie aufzunehmen.

3. Energieaufnahmevorrichtung nach Patentanspruch 1, **dadurch gekennzeichnet, dass** die doppelte Wicklung (3) zwei Spiralwicklungen (39, 40) mit entgegengesetzter Richtung und unterschiedlicher Windungszahl umfasst, wobei die genannten Wicklungen (39, 40) durch einen mittleren Bügel (42) verbunden sind, der mit dem beweglichen Träger (9) derart zusammenarbeitet, dass bei einem Stoß in einem ersten Zeitraum die beiden Wicklungen (39, 40) gleichzeitig abgerollt werden und dass in einem zweiten Zeitraum eine einzige Wicklung (40) abgerollt wird, um die Energieaufnahme je Zeiteinheit zu regulieren.

4. Energieaufnahmevorrichtung nach einem der vorangehenden Patentansprüche, **dadurch gekennzeichnet, dass** der Querschnitt des Metallteils der doppelten Wicklung (3) rund ist.

5. Energieaufnahmevorrichtung nach einem der Patentansprüche 1 bis 3, **dadurch gekennzeichnet, dass** der Querschnitt des Metallteils der doppelten Wicklung (3) quadratisch oder rechteckig ist.

6. Energieaufnahmevorrichtung nach einem der vorangehenden Patentansprüche, **dadurch gekennzeichnet, dass**:
- der feste Träger (8) zwei parallele Lappen (11, 12) aufweist, zwischen denen der bewegliche Träger (9) eingreift, wobei jeder der Lappen (11, 12) ein Loch (13, 14) für den Durchtritt der festen Achse (48) des drehbaren Teils (47) der Energieaufnahmevorrichtung aufweist;
- der bewegliche Träger (9) weist zwei Seitenteile (21, 22) und einen Befestigungsteil (20) auf, wobei jeder der Seitenteile (21, 22) in seinem unteren Teil ein Loch (23, 24) für den Durchtritt der Achse eines Systems (4) zur Einstellung der Neigung und/oder der Tiefe der Lenksäule aufweist;
- wobei jeder der Seitenteile (21, 22) in seinem oberen Teil ein Langloch (25, 26) für den Durchtritt der festen Achse (48) des drehbaren Teils (47) der Energieaufnahmevorrichtung aufweist, dessen Länge dem Energierückgewinnungsweg entspricht;
- die feste Achse (48) der Energieaufnahmevorrichtung ist auf jedem der Lappen (11, 12) des festen Tragteils (8) mit einer Klemmkraft eines bestimmten Betrages blockiert;
- die doppelte Wicklung (3) ist mit ihrem mittleren Abschnitt (34, 38. 42) an einem Zapfen (29) befestigt, der im Befestigungsteil (20) des beweglichen Trägers (9) ausgebildet ist, wobei er über den genannten Zapfen (29) geht und in Aussparungen (27, 28) eingreift, die auf jeder Seite des genannten Zapfens (29) ausgebildet sind.
